# EUROPÄISCHE PATENTSCHRIFT

(11) **EP 2 965 873 B1**
(45) Veröffentlichungstag und Bekanntmachung des Hinweises auf die Patenterteilung: **07.10.2020**
(21) Anmeldenummer: 14176476.1
(22) Anmeldetag: 10.07.2014
(51) Int. Cl.: B25J 9/16

(54) **Verfahren zur automatischen Steuerung eines Handhabungsgeräts**
Method for automatically controlling a manipulator
Procédé de commande automatique d'un manipulateur

(43) Veröffentlichungstag der Anmeldung: 13.01.2016
(73) Patentinhaber: Siemens Aktiengesellschaft, 80333 München (DE)
(72) Erfinder: Burmeister, Sören, 90762 Fürth (DE); Neubauer, Werner, 81739 München (DE)

(56) Entgegenhaltungen:
- EP-A1- 2 221 152
- WO-A2-2007/099511
- DE-A1-102010 012 598
- US-A1- 2012 072 023
- Anonymous: "Tutorial - Writing a Simple Pick and Place Application", , 30. November 2012 (2012-11-30), Seiten 1-20, XP55165710, Gefunden im Internet: URL:http://wiki.ros.org/pr2_tabletop_manip ulation_apps/Tutorials/Writing%20a%20Simpl e%20Pick%20and%20Place%20Application [gefunden am 2015-01-29]

## Beschreibung

Die Erfindung betrifft ein Verfahren zur automatischen Steuerung der Bewegungen eines Handhabungsgeräts, ein elektronisches Steuergerät zur Durchführung des Verfahrens, ein Programmiergerät zur Programmierung des Steuergeräts sowie ein Handhabungsgerät mit einem derartigen Steuergerät und mit einem derartigen Programmiergerät.

Bei komplexen Aktionen, Bewegungsabläufen oder Handlungsanweisungen im Rahmen von industriellen Fertigungsprozessen ist deren Durchführung üblicherweise nicht konkret und exakt vorhersagbar. Vielmehr können die vorzunehmenden Aktionen, deren Ablauf und die entsprechenden Bewegungsbahnen häufig erst während der Ausführung zur Laufzeit endgültig bestimmt werden. Dies erschwert die Automatisierung entsprechender Fertigungsprozesse durch den Einsatz von Handhabungsgeräten, wie z.B. von Robotern. Der zur Bereitstellung der erforderlichen Flexibilität notwendige Programmieraufwand stellt mittlerweile einen wesentlichen Kostenfaktor dar. Gerade auch wegen des hohen Aufwands der Programmierung rechnet sich der Einsatz von Handhabungsgeräten erst ab relativ hohen Stückzahlen.

Bisherige Programmieransätze für durchzuführende Handlungsanweisungen sind üblicherweise speziell auf spezifische Aufgaben ausgelegt. Im Automatisierungskontext werden so beispielsweise oft PLCopen-Befehle verwendet. Im Werkzeugmaschinenkontext sind dies G-Code-Befehle. Diese Sprachbefehle sind jedoch nur unzureichend geeignet, die zunehmend geforderte Komplexität zu bewältigen, so dass ein Bedarf an geeigneten Sprachkonstrukten entsteht, der die gegebenen neuen Herausforderungen berücksichtigt.

Weiter existieren Ansätze zur automatisierten Bewegungsplanung, um den Programmieraufwand zu reduzieren. Die Parametrisierung der Planungsalgorithmen ist dabei jedoch aufwändig.

Insbesondere gilt dies dann, wenn die Bewegungsbahnen des Handhabungsgeräts erst während der Ausführung zur Laufzeit berechnet werden können. In diesem Fall ist die Planung nicht nur zeitkritisch, sondern muss auch in der Lage sein, zu jeder möglichen Situation die erforderlichen Parameter selbstständig aus dem jeweils gegebenen Anlagenzustand zu ermitteln. Bei klassischen Programmmieransätzen, bei denen eine Aufgabe des Handhabungsgeräts im Wesentlichen als eine Folge von Bewegungsanweisungen implementiert wird, stehen diese Informationen nicht zur Verfügung, da der Kontext nicht bekannt bzw. hinterlegt ist.

Im anonymen Web-Totorial "Tutorial - Writing a Simple Pick and Place Application" vom 30.11.2012, erhältlich unter http://wiki.ros.org/pr2_tabletop_manipulation _apps/Tutorials/Writing%20a%20Simple%20Pick%20and%20Place%20A pplication ist ein Verfahren zur Programmierung eines Handlungsablaufes für einen Greifarm gezeigt, in welchem ein zu greifendes Objekt optisch erfasst wird, und nach einem Greifen in eine vorgegebene Richtung zu einem vorgegebenen Ziel bewegt wird. Hierbei werden mögliche Kollisionen des Objekts bei der Bewegung beachtet.

Die EP 2 221 152 A1 nennt ein ähnliches Verfahren. Hierbei wird die Position eines zu greifenden Objektes optisch erfasst, und ein Greifroboter nach einem entsprechenden Greifen des Objektes entlang eines vorab definierten Weges zu einem vorgegebenen Ziel bewegt wird.

Der Erfindung liegt die Aufgabe zugrunde, ein Verfahren zur automatisierten Steuerung der Bewegungen eines Handhabungsgeräts anzugeben, welches bei einem möglichst geringen Programmieraufwand eine möglichst hohe Flexibilität bei der Ausführung der gewünschten Handlungsaufgaben aufweist.

Die gestellte Aufgabe wird erfindungsgemäß durch ein Verfahren zur automatisierten Steuerung der Bewegungen eines Handhabungsgeräts gelöst, wobei die Bewegungen unterteilt sind in vorgegebene, objektbezogene Interaktionsbewegungen und in ortsbezogene Transferbewegungen, wobei eine Objektlage und/oder eine Objektorientierung erfasst wird, wobei das Handhabungsgerät zur Durchführung einer Interaktionsbewegung relativ zur erfassten Objektlage und/oder Objektorientierung angesteuert wird, wobei eine Lage und/oder Orientierung des Handhabungsgeräts erfasst wird, wobei eine Trajektorie zu einer Transferbewegung zwischen einer Startposition und einer Zielposition ermittelt wird, und wobei das Handhabungsgerät zur Durchführung der Transferbewegung entlang der ermittelten Trajektorie angesteuert wird.

Die Erfindung sieht demnach vor, die zur Ausführung einer Handlungsanweisung erforderlichen Bewegungen des Handhabungsgeräts durch zwei Arten von Teilbewegungen zu beschreiben, nämlich durch objektbezogene Interaktionsbewegungen einerseits und durch ortsbezogene Transferbewegungen andererseits. Interaktionsbewegungen sind dabei objektbezogen vorgeplante, komplexe und stark von der durchzuführenden Aufgabe des Handhabungsgeräts abhängige Bewegungsabläufe, in denen das Handhabungsgerät oder Roboter insbesondere innerhalb einer Bearbeitungsstation mit dem zu behandelnden Objekt interagiert. Transferbewegungen sind solche Bewegungen, die durchgeführt werden müssen, um das Handhabungsgerät mit oder ohne Objekt für die nächste Interaktionsbewegung geeignet zu positionieren.

Während die Interaktionsbewegungen vorgeplant werden können, sind die Trajektorien für Transferbewegungen oft nicht vorherberechenbar, da sich Zielpunkte und/oder Rahmenbedingungen, wie z.B. bewegliche Hindernisse, zur Laufzeit ändern können. Transferbewegungen können zwar sehr komplex sein, z.B. wenn ein sperriges Objekt oder Bauteil in einem begrenzten Raum kollisionsfrei und geschwindigkeitsoptimiert bewegt werden soll. Im Regelfall können jedoch Transferbewegungen automatisiert von einem Bewegungsplaner in Kenntnis der vorliegenden Gegebenheiten berechnet werden.

Die Erfindung erkennt bei der angegebenen Lösung, dass eine Transferbewegung durch zusammenhängende Interaktionsbewegungen implizit die für eine Planung der entsprechenden Trajektorie relevanten Daten und Einschränkungen bereitgestellt bekommt, ohne dass sich ein Programmierer speziell darum kümmern muss. Je verzweigter die Ablauflogik der Handlungsanweisung für ein oder mehrere Handhabungsgeräte ist, desto größer ist die Anzahl der durchzuführenden Transferbewegungen, wohingegen die Anzahl der Interaktionsbewegungen weitgehend konstant bleibt. Speziell bei Ilandlungsanweisungen, die eine große Flexibilität erfordern, ist die Anzahl von Transferbewegungen im Vergleich zu den Interaktionsbewegungen groß.

Die Erfindung bietet insofern den Vorteil einer starken Reduktion des Programmieraufwands, da die mit der Komplexität der Handlungsanweisungen steigende Anzahl an Transferbewegungen nicht vorprogrammiert werden muss. Durch die Ermittlung der Trajektorien für die jeweiligen Transferbewegungen in Laufzeit erhöht sich zudem die Flexibilität des Steuerungsverfahrens, da Bezug auf sich ändernde Bedingungen genommen ist.

Bevorzugt sind die Interaktionsbewegungen relativ zur Objektlage und/oder relativ zur Objektorientierung vorgegeben. Mit anderen Worten sind die Interaktionsbewegungen im Bezugssystem des zu behandelnden Objekts vorgegeben, wodurch eine erhöhte Flexibilität bezüglich der Lage oder Orientierung des Objekts gegeben ist. Insbesondere muss das Objekt nicht in einer exakt vorgegebenen Position und/oder Lage vorgegeben sein, damit die Interaktionsbewegung korrekt durchgeführt werden kann.

Erfindungsgemäß wird einer oder jeder vorgegebenen Interaktionsbewegung eine in Form von Daten hinterlegte Bearbeitungsstation zugewiesen, wobei die oder jede Interaktionsbewegung anhand der Daten ausgehend von der erfassten Objektlage und/oder Objektorientierung dynamisch in Laufzeit parametrisiert wird. Dabei wird unter einer Bearbeitungsstation ein physikalisches Objekt im Raum verstanden, zu welchem in Form der Daten ein Modell vorliegt, das alle für den Umgang mit dem Objekt innerhalb der Bearbeitungsstation relevanten Daten kapselt. Beispiele für solche Bearbeitungsstationen sind Paletten oder Förderbandabschnitte. Andere Möglichkeiten für Bearbeitungsstationen sind eine Messstation, eine Ablagestation, eine Aufnahmestation oder eine Fügestation etc.

Neben den reinen Informationen über die physikalische Bearbeitungsstation beinhaltenden Daten können vom Modell auch Daten über diverse mögliche Greifpositionen sowie Zugriffsmethoden für die zur Bearbeitungsstation gehörenden Sensoren umfasst sein. Die Zuweisung einer Bearbeitungsstation zu einer Interaktionsbewegung dient auch der Bereitstellung eines Kontextes, der genutzt werden kann, um dynamisch zur Laufzeit die mit der Bearbeitungsstation zusammenhängenden Bewegungen geeignet zu parametrisieren. Dadurch, dass die Interaktionsbewegungen, also die eigentlichen Handhabungsschritte, als Interaktion mit einer Bearbeitungsstation beschrieben werden, können insbesondere die für die Planung von Transferbewegungen benötigten Parameter implizit aus dem Kontext der gegebenen Ablauflogik erschlossen werden.

Zweckmäßigerweise wird insofern die Trajektorie einer oder jeder Transferbewegung unter Berücksichtigung der hinterlegten Daten der oder jeder Bearbeitungsstation, insbesondere von benachbarten Bearbeitungsstationen, gewonnen. Unter benachbarten Bearbeitungsstationen werden hierbei solche Stationen verstanden, deren Interaktionsbewegungen über die zeitliche Reihenfolge miteinander verknüpft sind. Findet beispielsweise in einer Messstation eine sensorische Überprüfung des aufgenommenen Objekts statt, anhand derer eine Zuführung des Objekts in den weiteren Fertigungsprozess oder eine Entsorgung des Objekts entschieden wird, so können die hierzu jeweils notwendigen Transferbewegungen aus den für die Messstation und die Zuführstation oder für die Messstation und die Entsorgungsstation hinterlegten Daten parametrisiert bzw. die entsprechenden Trajektorien ermittelt werden.

Bevorzugt wird insbesondere die Start- und/oder Zielposition für eine Transferbewegung unter Berücksichtigung der hinterlegten Daten der oder jeder Bearbeitungsstation, insbesondere von benachbarten Bearbeitungsstationen, gewonnen.

Zweckmäßigerweise werden die Objektlage und/oder die Objektorientierung sensorisch erfasst. Ebenfalls von Vorteil ist es, wenn die Lage und/oder die Orientierung des Handhabungsgeräts sensorisch erfasst wird. Auf diese Weise kann flexibel auf sich während der Durchführung ändernde Gegebenheiten eingegangen werden. Insbesondere können hierbei eine Startposition und/oder eine Zielposition für eine durchzuführende Transferbewegung ermittelt und festgelegt werden.

Weiter bevorzugt werden die Bewegungen des Handhabungsgeräts störende Hindernisse sensorisch erfasst, wobei die erfassten Hindernisse bei der Steuerung des Handhabungsgeräts zur Durchführung der Interaktionsbewegung und/oder der Ermittlung der Trajektorie einer Transferbewegung berücksichtigt werden. Durch diese Ausgestaltung kann insbesondere auf sich während des Fertigungsprozesses ändernde äußere Bedingungen eingegangen werden, wodurch die Flexibilität des angegebenen Verfahrens im Hinblick auf eine dynamische Anpassung an äußere Gegebenheiten erhöht ist.

Die Erfindung betrifft auch ein elektronisches Steuergerät, welches zur Durchführung des vorbeschriebenen Verfahrens eingerichtet und ausgebildet ist. Dabei können die für das Steuerverfahren und deren vorteilhafte Ausgestaltungen genannten Vorteile sinngemäß auf das Steuergerät übertragen werden.

Offenbart ist weiter ein Programmiergerät, welches zur Programmierung des Steuergeräts zur Durchführung des vorbeschriebenen Verfahrens eingerichtet und ausgebildet ist. Das Programmiergerät ist hierbei insbesondere derart ausgebildet, dass es im Rahmen einer Plattform die Vorgabe der Interaktionsbewegungen innerhalb einer Bearbeitungsstation

ermöglicht, wobei im Rahmen einer weiter vorgebbaren Ablauflogik die Bearbeitungsstationen verknüpft werden. Dazu werden die eine jeweilige Bearbeitungsstation beschreibenden Daten hinterlegt bzw. programmiert. Für die Transferbewegungen brauchen keine konkreten Abläufe oder Trajektorien vorgegeben werden. Diese werden anhand der verknüpften Bearbeitungsstationen aus den jeweiligen Interaktionen dynamisch in Laufzeit berechnet. Bevorzugt können für die Trajektorien jedoch Hindernisse bzw. Beschränkungen vorgegeben werden, die sich gegebenenfalls aus den Bearbeitungsstationen nicht unmittelbar erschließen lassen.

Des Weiteren betrifft die Erfindung ein Handhabungsgerät mit einem Steuergerät, welches zur Durchführung des vorbeschriebenen Verfahrens ausgebildet und eingerichtet ist, und mit einem Programmiergerät wie vorbeschrieben.

Ausführungsbeispiele der Erfindung werden anhand einer Zeichnung näher erläutert. Dabei zeigen:
- FIG 1: ein Ablaufdiagramm für einen komplexen Handlungsab-lauf im Rahmen eines Fertigungsprozesses und
- FIG 2: schematisch ein Handhabungsgerät mit Steuer- und Programmiergerät.

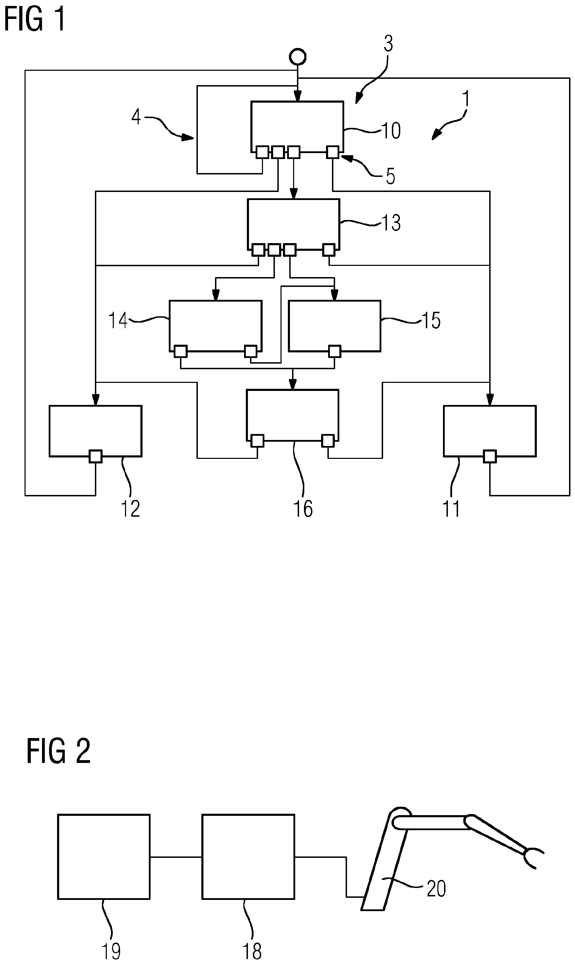

In FIG 1 ist schematisch ein Ablaufdiagramm 1 für einen Handlungsablauf im Rahmen eines automatisierten industriellen Fertigungsprozesses dargestellt. Der durch das Ablaufdiagramm 1 dargestellte Handlungsablauf betrifft eine Mikromontageaufgabe, innerhalb derer ein Handhabungsgerät kleine optische Linsen aus einer Palette greifen und an einer Fügestation zur Weiterverarbeitung ablegen soll. Die Handlungsabfolge ist schematisch anhand von Boxen und anhand von die Boxen verbindenden Linien skizziert, wobei durch jede Box eine separate Bearbeitungsstation mit zugeordneter vorgegebener Interaktionsbewegung 3 definiert ist, und wobei jede Verbindungslinie zwischen den Boxen eine entsprechende Transferbewegung 4 zwischen den Bearbeitungsstationen angibt.

Das dargestellte Ablaufdiagramm 1 bzw. der damit verbundene Handlungsablauf zur Behandlung der Linsen weist innerhalb einiger Bearbeitungsstationen eine Flexibilität hinsichtlich der weiteren Verfahrensabläufe bzw. Bewegungen insofern auf, als dass ein Ergebnis einer durchgeführten Interaktionsbewegung, eine Information des Objekts oder eine Information der Bearbeitungsstation durch eine geeignete Sensorik 5 erfasst und abhängig von diesem Ergebnis die nächsten Handlungsschritte entschieden werden.

Zur Palette 10 ist als Interaktionsbewegung das Ergreifen der angelieferten Linsen objektbezogen hinterlegt. An der Palette 10 sowie am Greifer des Handhabungsgeräts sind Sensoren zur Überwachung angebracht. Je nach Ergebnis der Sensordatenauswertung wird die Linse über jeweilige Transferbewegungen zu einer Fügestation 11, zu einem Auffangbehälter 12 oder zu einer nachfolgenden Messstation 13 gebracht. Der Transport der Linse zur Fügestation erfolgt bei einwandfreiem Zustand der ergriffenen Linse. Werden Abweichungen von einem vorgegebenen Sollzustand erfasst, wird die Linse zum Zweck einer vorgesehenen Korrektur in die Messstation 13 transportiert und dort einer präziseren Nachmessung unterworfen. Bei schwerwiegenderen Abweichungen vom Sollzustand wird die aufgenommene Linse direkt in dem Auffangbehälter 12 entsorgt.

In seltenen Fällen können Paletten auch fehlerhaft und unvollständig bestückt sein. Über eine geeignete Sensorik wird registriert, dass der Greifvorgang in diesem Fall aufgrund einer fehlenden Linse im angefahrenen Palettenfach nicht erfolgreich durchgeführt werden konnte. Als Folge wird der Greifvorgang mit dem nächsten Palettenfach wiederholt, wozu das Handhabungsgerät im Rahmen einer dynamisch parametrisierten Transferbewegung zurück positioniert wird.

In der Messstation 13 wird beispielsweise mit Hilfe einer Lichtbrechungsmessung die Linse und die Art und Weise, wie sie gehalten bzw. orientiert ist, auf Fehlerzustände hin untersucht. Auf Basis der während dieser Messungen erhaltenen Daten wird nun entweder der Fügeprozess in der Fügestation 11 angeschlossen, sofern sich der durch die Vorprüfung an der Palette registrierte Fehler als geringfügig erwiesen hat, oder es wird der gemessene Fehler in einer Reinigungsstation 14 oder Korrekturstation 15 korrigiert bzw. behoben. Bei größeren Abweichungen wird die Linse im Auffangbehälter 12 entsorgt.

Die Reinigungsstation 14 ist zur Beseitigung von Verschmutzungen eingerichtet. Die Korrekturstation 15 ist zu einer präzisen Nachjustierung der Position der Linse im Greifer des Handhabungsgeräts ausgebildet. In beiden Stationen 14,15 werden die Messergebnisse an der Messstation 13 dazu verwendet, den aufgefundenen Fehler präzise zu beseitigen. Liegt nur eine der beiden Fehlerarten vor, so wird direkt die entsprechende Station 14 oder 15 angefahren. Liegen beide Fehler, also eine Verschmutzung und eine nicht gewünschte Greifposition vor, so wird die Linse zunächst in der Reinigungsstation 14 gereinigt und anschließend in der Korrekturstation 15 in ihrer Position im Greifer korrigiert, wobei die Reihenfolge auch umgedreht werden kann.

Unabhängig von der Art der durchgeführten Korrekturen wird nach deren Abschluss eine weitere Messstation 16 angefahren, um sicherzustellen, dass die Korrektur erfolgreich war. Falls weiterhin ein Fehler erkannt ist, so wird die Linse wiederum im Auffangbehälter 12 entsorgt. Andernfalls wird die Linse an der Fügestation 11 eingefügt. Nach durchgeführter Entsorgung oder Fügung bewegt sich das Handhabungsgerät wieder zur Palette 10 zurück, um die nächste Linse zu ergreifen.

Während die Interaktionsbewegungen innerhalb der einzelnen Bearbeitungsstationen vorgegeben sind, werden die jeweiligen Transferbewegungen dynamisch während der Durchführung des Prozesses berechnet. Bei der Festlegung der jeweiligen Trajektorien wird insbesondere auf die für die einzelnen Bearbeitungsstationen hinterlegten Daten zurückgegriffen. Zur Festlegung des gezeigten Handlungsablaufs ist eine Programmierung der Transferbewegungen als solche nicht erforderlich. Vielmehr werden die Transferbewegungen aus der Abfolge benachbarter Bearbeitungsstationen und hierbei insbesondere aus deren im Rahmen eines Modells hinterlegten Daten gewonnen.

In FIG 2 ist schematisch ein Handhabungsgerät 20 dargestellt. Zu dessen Steuerung ist ein Steuergerät 18 vorgesehen. Über ein Programmiergerät 19 wird über eine entsprechende Programmierplattform das Steuergerät 19 zur Ansteuerung des Handhabungsgeräts 20 programmiert. Über das Programmiergerät 19 werden insbesondere Daten der jeweiligen Bearbeitungsstationen hinterlegt und den jeweiligen Bearbeitungsstationen zugeordnete Interaktionsbewegungen zur Planung vorgegeben. Auch wird die Verknüpfung der einzelnen Bearbeitungsstationen im Rahmen eines konkreten Handlungsablaufs vorgegeben. Während die Interaktionsbewegungen beispielsweise erlernt oder eingegeben werden müssen, sind solche Schritte zur Eingabe der jeweiligen Transferbewegungen nicht erforderlich.

### Bezugszeichenliste

- 1: Ablaufdiagramm
- 3: Interaktionsbewegung
- 4: Transferbewegung
- 5: Sensorische Erfassung
- 10: Palette (Greifen)
- 11: Fügestation (Fügen)
- 12: Auffangbehälter (Verwerfen)
- 13: Messstation (Messen)
- 14: Reinigungsstation (Reinigen)
- 15: Korrekturstation (Korrigiere Position)
- 16: Messstation (Überprüfen)
- 18: Steuergerät
- 19: Programmiergerät
- 20: Handhabungsgerät

## Patentansprüche

1. Verfahren zur automatisierten Steuerung der Bewegungen eines Handhabungsgeräts (20), wobei die Bewegungen unterteilt sind in vorgegebene, objektbezogene Interaktionsbewegungen (3) und in ortsbezogene Transferbewegungen (4), wobei eine Objektlage und/oder eine Objektorientierung erfasst wird, wobei das Handhabungsgerät (20) zur Durchführung einer Interaktionsbewegung (3) relativ zur erfassten Objektlage und/oder Objektorientierung angesteuert wird, wobei eine Lage und/oder Orientierung des Handhabungsgeräts (20) erfasst wird, wobei eine Trajektorie zu einer Transferbewegung (4) zwischen einer Startposition und einer Zielposition ermittelt wird, und wobei das Handhabungsgerät (20) zur Durchführung der Transferbewegung entlang der ermittelten Trajektorie angesteuert wird,
wobei einer oder jeder vorgegebenen Interaktionsbewegung (3) eine in Form von Daten hinterlegte Bearbeitungsstation (10-16) zugewiesen wird, und wobei die oder jede Interaktionsbewegung (3) anhand der Daten ausgehend von der erfassten Objektlage und/oder Objektorientierung dynamisch in Laufzeit parametrisiert wird,
**dadurch gekennzeichnet, dass**
die oder jede Transferbewegung dynamisch in Laufzeit berechnet wird, und dabei die oder jede Transferbewegung (4) unter Berücksichtigung der hinterlegten Daten der oder jeder Bearbeitungsstation (10-16) aus der Abfolge von benachbarten Bearbeitungsstationen (10-16) gewonnen wird.

2. Verfahren nach Anspruch 1,
wobei die Interaktionsbewegungen (3) relativ zur Objektlage und/oder relativ zur Objektorientierung vorgegeben sind.

3. Verfahren nach Anspruch 1 oder 2,
wobei die Trajektorie einer oder jeder Transferbewegung (4) unter Berücksichtigung der hinterlegten Daten der oder jeder Bearbeitungsstation (10-16), insbesondere von benachbarten Bearbeitungsstationen (10-16), gewonnen wird.

4. Verfahren nach einem der vorhergehenden Ansprüche, wobei die Start- und/oder Zielposition für eine Transferbewegung (4) unter Berücksichtigung der hinterlegten Daten der oder jeder Bearbeitungsstation (10-16), insbesondere von benachbarten Bearbeitungsstationen (10-16), gewonnen wird.

5. Verfahren nach einem der vorhergehenden Ansprüche, wobei die Objektlage und/oder die Objektorientierung sensorisch erfasst werden.

6. Verfahren nach einem der vorhergehenden Ansprüche, wobei die Lage und/oder die Orientierung des Handhabungsgeräts (20) sensorisch erfasst werden.

7. Verfahren nach einem der vorhergehenden Ansprüche, wobei sensorisch die Bewegungen des Handhabungsgeräts (20) störende Hindernisse erfasst werden, und wobei die erfassten Hindernisse bei der Steuerung des Handhabungsgeräts (20) zur Durchführung der Interaktionsbewegung (3) und/oder der Ermittlung der Trajektorie einer Transferbewegung (4) berücksichtigt werden.

8. Elektronisches Steuergerät (18), welches zur Durchführung des Verfahrens nach einem der vorhergehenden Ansprüche eingerichtet und ausgebildet ist.

9. Handbabungsgerät (20) mit einem Steuergerät (18) nach Anspruch 8 und mit einem Programmiergerät (19), welches zur Programmierung des Steuergeräts zur Durchführung des Verfahrens nach einem der Ansprüche 1-7 eingerichtet und ausgebildet ist.

## Claims

1. Method for controlling the movements of a handling device (20) in an automated manner, wherein the movements are subdivided into predefined object-based interactive movements (3) and location-based transfer movements (4), wherein an object position and/or an object orientation is/are captured, wherein the handling device (20) is actuated in order to perform an interactive movement (3) relative to the captured object position and/or object orientation, wherein a position and/or an orientation of the handling device (20) is/are captured, wherein a trajectory for a transfer movement (4) between a starting position and a target position is determined, and wherein the handling device (20) is actuated in order to perform the transfer movement along the determined trajectory, wherein a processing station (10-16) stored in the form of data is allocated to an or each predefined interactive movement (3), and wherein the or each interactive movement (3) is dynamically parameterized at runtime using the data on the basis of the captured object position and/or object orientation,
**characterized in that**
the or each transfer movement is dynamically calculated at runtime, and the or each transfer movement (4) is obtained in this case from the sequence of adjacent processing stations (10-16) by taking into account the stored data relating to the or each processing station (10-16).

2. Method according to Claim 1,
wherein the interactive movements (3) are predefined relative to the object position and/or relative to the object orientation.

3. Method according to Claim 1 or 2,
wherein the trajectory of a or each transfer movement (4) is obtained by taking into account the stored data relating to the or each processing station (10-16), in particular adjacent processing stations (10-16).

4. Method according to one of the preceding claims, wherein the starting position and/or target position for a transfer movement (4) is/are obtained by taking into account the stored data relating to the or each processing station (10-16), in particular adjacent processing stations (10-16).

5. Method according to one of the preceding claims, wherein the object position and/or the object orientation is/are captured using sensors.

6. Method according to one of the preceding claims, wherein the position and/or the orientation of the handling device (20) is/are captured using sensors.

7. Method according to one of the preceding claims, wherein obstacles interfering with the movements of the handling device (20) are captured using sensors, and wherein the captured obstacles are taken into account when controlling the handling device (20) in order to perform the interactive movement (3) and/or when determining the trajectory of a transfer movement (4).

8. Electronic control device (18) which is configured and designed to carry out the method according to one of the preceding claims.

9. Handling device (20) having a control device (18) according to Claim 8 and having a programming device (19) which is configured and designed to program the control device for carrying out the method according to one of Claims 1-7.

## Revendications

1. Procédé de commande automatique des mouvements d'un appareil de manipulation (20), les mouvements étant répartis en mouvements d'interaction (3) prédéfinis, rapportés à un objet, et en mouvements de transfert (4) rapportés à un lieu, une position d'objet et/ou une orientation d'objet étant captées, l'appareil de manipulation (20) étant commandé pour exécuter un mouvement d'interaction (3) relativement à la position d'objet et/ou à l'orientation d'objet captées, une position et/ou une orientation de l'appareil de manipulation (20) étant captées, une trajectoire relative à un mouvement de transfert (4) entre une position de départ et une position cible étant déterminée, et l'appareil de manipulation (20) étant commandé pour exécuter le mouvement de transfert le long de la trajectoire déterminée,
à un ou à chaque mouvement d'interaction prédéfini (3) étant affectée une station de traitement (10-16) déposée sous la forme de données, et le ou chaque mouvement d'interaction (3) étant paramétré dynamiquement en termes de durée à l'aide des données à partir de la position d'objet et/ou de l'orientation d'objet captées
**caractérisé en ce que**
le ou chaque mouvement de transfert est calculé dynamiquement en termes de durée et le ou chaque mouvement de transfert (4) est obtenu compte tenu des données déposées de la ou de chaque station de traitement (10-16) de la succession de stations de traitement voisines (10-16).

2. Procédé selon la revendication 1, les mouvements d'interaction (3) étant spécifiés relativement à la position d'objet et/ou relativement à l'orientation d'objet.

3. Procédé selon la revendication 1 ou 2, la trajectoire d'un ou de chaque mouvement de transfert (4) étant obtenue compte tenu des données déposées de la ou de chaque station de traitement (10-16), et plus particulièrement de stations de traitement voisines (10-16).

4. Procédé selon l'une des revendications précédentes, la position de départ et/ou la position cible étant obtenues, pour un mouvement de transfert (4), compte tenu des données déposées de la ou de chaque station de traitement (10-16), et plus particulièrement de stations de traitement voisines (10-16).

5. Procédé selon l'une des revendications précédentes, la position d'objet et/ou l'orientation d'objet étant captées par capteur(s).

6. Procédé selon l'une des revendications précédentes, la position et/ou l'orientation de l'appareil de manipulation (20) étant captées par capteur(s).

7. Procédé selon l'une des revendications précédentes, des obstacles gênant les mouvements de l'appareil de manipulation (20) étant captés par capteur(s) et les obstacles captés étant pris en compte lors de la commande de l'appareil de manipulation (20) pour exécuter le mouvement d'interaction (3) et/ou la détermination de la trajectoire d'un mouvement de transfert (4).

8. Appareil de commande électronique (18) qui est configuré et conçu pour exécuter le procédé selon l'une des revendications précédentes.

9. Appareil de manipulation (20) comprenant un appareil de commande (18) selon la revendication 8 et un appareil de programmation (19) qui est configuré et conçu pour programmer l'appareil de commande pour exécuter le procédé selon l'une des revendications 1-7.
